# EUROPÄISCHE PATENTSCHRIFT

(11) **EP 1 414 679 B1**
(45) Veröffentlichungstag und Bekanntmachung des Hinweises auf die Patenterteilung: **08.11.2006**
(21) Anmeldenummer: 02754434.5
(22) Anmeldetag: 25.07.2002
(51) Int. Cl.: B60R 21/34

(54) **KOPFAUFPRALLOPTIMIERTE FRONTSTRUKTUR**
FRONT STRUCTURE THAT IS OPTIMISED FOR A HEAD IMPACT
STRUCTURE AVANT OPTIMISEE POUR UNE COLLISION DE TETE

(30) Priorität: 28.07.2001 DE 10136902
(43) Veröffentlichungstag der Anmeldung: 06.05.2004
(73) Patentinhaber: ADAM OPEL AG, 65423 Rüsselsheim (DE)
(72) Erfinder: BLÄSSER, Stephan, 55234 Wahlheim (DE); KERKELING, Christoph, 55118 Mainz (DE); VISINESCU, Radu-Mihail, 60599 Frankfurt (DE)
(86) Internationale Anmeldenummer: PCT/DE2002/002730
(87) Internationale Veröffentlichungsnummer: WO 2003/011660

(56) Entgegenhaltungen:
- EP-A- 0 992 418
- EP-A- 1 022 199
- DE-A- 10 038 430
- DE-A- 19 514 324

## Beschreibung

Die Erfindung bezieht sich auf eine kopfaufpralloptimierte Frontstruktur eines Kraftfahrzeuges mit einer stabilen, im Falle einer stoßartigen Belastung aber verformbaren Motorhaube mit einer oberen Schale und einer darunter angeordneten und mit dieser verbundenen Versteifungslage, wobei sich bei einem Kopfaufprall ein bestimmter zeitlicher Verzögerungsverlauf einstellt, aus dem sich ein HIC-Wert ableiten lässt.

Nachdem lange Zeit die passive Sicherheit der Fahrzeuginsassen eines Fahrzeuges bei den Fahrzeugherstellern und den Fahrzeugnutzern im Vordergrund gestanden hat, hat sich der Fokus der Sicherheitstechnik in den letzten Jahren auf die Problematik von Fußgänger-Kraftfahrzeugunfällen gerichtet. Bei einem solchen Unfall wird der Fußgänger von der Front des Fahrzeuges erfasst. Dabei rammt die Stoßstange die Beine des Fußgängers, wodurch der Körper auf die in etwa waagerecht verlaufende Motorhaube des Fahrzeuges gekippt bzw. abgewickelt wird. Schließlich schlägt der Kopf auf die Motorhaube, wobei erhebliche Verzögerungen auftreten, die zu schweren Gehirnverletzungen führen können.

Um die Schwere der Verletzungen, die bei einem solchen Kopfaufprall auftreten, bestimmen zu können, wurde ein Kopfverletzungskriterium HIC (Head Injury Criterion) definiert. Es ist das Produkt aus der mittleren, in einem Zeitfenster wirkenden Verzögerung multipliziert mit der zeitlichen Ausdehnung des Zeitfensters, wobei die mittlere Verzögerung mit dem Exponenten 2,5 in das Produkt einfließt. Zur Auswertung eines gesamten Verzögerungsverlaufes wird dieser mit verschieden breiten Zeitfenstern abgefahren und jeweils das oben definierte Produkt berechnet. Der größte sich einstellende Wert ist der maßgebliche HIC-Wert des Kopfaufpralles. Dieser Formel liegt die Erkenntnis zugrunde, dass ein Zusammenhang besteht zwischen Einwirkungsdauer und Verzögerung. Je kürzer die Einwirkungsdauer ist, desto höhere Verzögerungen werden vom Körper ertragen und ohne Verletzungen überstanden. Der HIC-Wert basiert somit auf einer mathematischen Funktion, mit der die innerhalb einer Zeitspanne auftretende Kopfverzögerung bewertet wird.

Für die konkrete Anwendung der Formel wird mit einem Grenzwert von 1.000 gerechnet, wobei die Verzögerung in m/s² und die Zeit in sec angegeben wird. Ergibt die Auswertung des zeitlichen Verlaufs einer Verzögerung ein Ergebnis unterhalb dieses Grenzwertes, so kann davon ausgegangen werden, dass nicht mit schweren Kopfverletzungen zu rechnen ist.

HIC-Werte unterhalb 1.000 lassen sich natürlich leicht erreichen, wenn ein ausreichender Verzögerungsweg zur Verfügung steht, der in der Frontstruktur eines Kraftfahrzeuges aber nicht vorhanden ist, da sich unmittelbar unterhalb der Motorhaube das Antriebsaggregat und weitere Karosseriekomponente befinden.

Außerdem ist zu beachten, dass die Motorhaube genügend steif sein muss, damit sie sich selbst tragen kann und statischen und fahrdynamischen Belastungen gewachsen ist. In der Regel resultieren daraus aber Widerstände bei einer dynamischen Belastung, die zu hohen HIC-Werten führen.

Dieser Zielkonflikt, nämlich eine ausreichende Steifigkeit gegenüber statischen Belastungen einerseits und eine genügende Nachgiebigkeit bei einem Kopfaufprall andererseits, wird gemäß der EP 0 992 419 A2 dadurch versucht zu lösen, dass die Haube eine gewölbte Form erhält, die auf seitlichen Auflageteilen aufliegt und den dazwischen liegenden Motorraum frei überspannt. Die Motorhaube selbst besteht aus einer oberen Schale und einer darunter angeordneten energieabsorbierenden Versteifungslage und ist damit nachgiebig gestaltet. Sie erhält ihre Steifigkeit einerseits durch den gewählten Sandwichaufbau aber vor allem durch die gewölbte Form. Mit dieser Konstruktion soll ein möglichst gleichmäßiger Verzögerungsverlauf ohne Kraftspitzen erzielt werden, wie an einigen Stellen in der BP 0 992 418 A2 erwähnt ist. Ein solcher Verlauf würde aber im Konkreten bedeuten, dass für ein erträgliches Kopfverzögerungsniveau der widerstand der Konstruktion gegen eine dynamische Belastung so klein sein muss, dass sie statischen Belastungen nicht gewachsen sein würde. Nachteilig bei dieser Ausführung ist außerdem, dass nicht in jede Fahrzeugkonstruktion eine solche Haube einsetzbar ist: Je nachdem, auf welcher Höhe sich die Auflageteile durch konstruktive Vorgaben bedingt befinden, würde sich bei einer solchen Motorhaube die Wölbung sichtbehindernd vor die Windschutzscheibe erheben.

In der DE 195 14 324 A1 wird eine Motorhaube mit einem harten aber spröden Versteifungselement an der Unterseite der Motorhaube beschrieben, wobei dieses bricht, wenn es gegen ein festes Hinderniss im Motorraum, also gegen ein Gegenlager, schlägt. Sobald der versteifende Effekt nicht mehr besteht, kann ein Innengerippe in der Motorhaube zusammengedrückt werden, wodurch eine sekundäre Reaktionskraft hervorgerufen wird. Somit setzt der Bruch der versteifung eine Durchbiegung der Haube voraus, damit das Versteifungselement zum festen Widerstand gelangen kann.

Das zu lösende Problem besteht somit darin, eine generell einsetzbare Frontstruktur mit einer Motorhaube zu schaffen, die möglichst geringe Verletzungen bei einem Fußgänger während einer Fahrzeug-Fußgänger-Kollision hervorruft, wobei ein optimaler zeitlicher Verzögerungsverlauf auf möglichst kurzem Weg erreicht werden soll.

Das Problem wird erfindungsgemäß mit einer Frontstruktur gemäß den Merkmalen des Anspruchs 1 gelost.

Mit diesem Aufbau wird erreicht, dass die Konstruktion gegenüber statischen Belastungen steif genug ausgeführt werden kann, obwohl eine statische Steifigkeit an sich zu hohen HIC-Werten führen wurde. Dies wird aber dadurch unterbunden, dass über ein mit einer bestimmten Krafteinwirk-ung und Durchbiegung verbundenes Belastungsniveau hinaus ein Teil der Struktur - nämlich die Versteifungslage - kollabiert, was zur Folge hat, dass hohe Verzögerungswerte nur für einen kurzen, anfänglichen Zeitraum vorliegen, was den HIC-Wert nicht zu stark anwachsen lässt.

Dadurch, dass die Versteifungslage von einer Schicht aus Schaumstoff, gebildet ist, deren Material eine gewisse Sprödigkeit besitzt, so dass bei einer lokalen stoßartigen Belastung die Schicht in ihrer Mikrostruktur kollabiert. Kollabieren bedeutet in diesem Fall, dass die Wände und Brücken, die die Poren z. B. einer Schaumstoffschicht einschließen, wegen der Sprödigkeit des Materials brechen, so dass die Schicht ohne weiteren Widerstand bzw. mit einem reduzierten Widerstand zusammengedrückt wird.

Mit einem derartigen verzögerungsverlauf wird die kinetische Energie des aufschlagenden Kopfes relativ früh in einem hohen Maß abgebaut, so dass, selbst wenn es nach dem Durchbiegen der Motorhaube noch zu einem Kontakt mit einem darunter liegenden Aggregat kommt, keine starken Verletzungen zu erwarten sind.

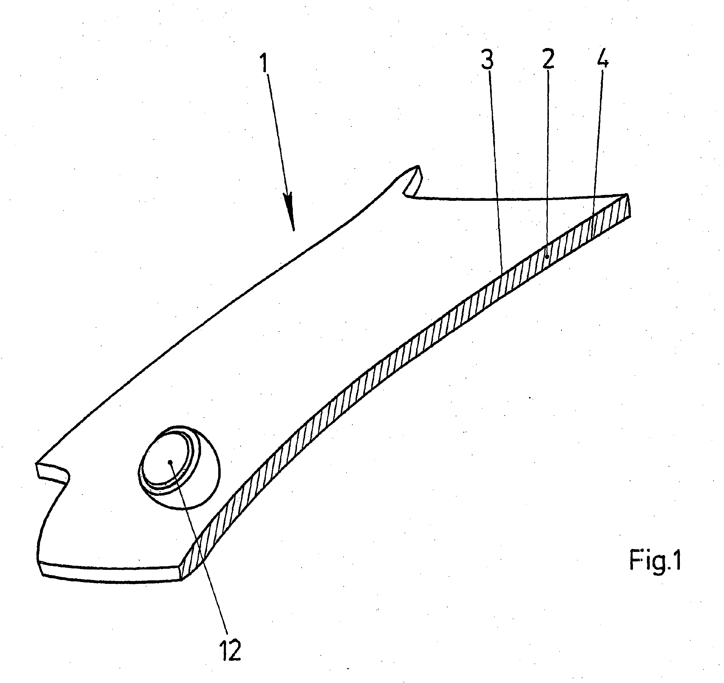

Der Effekt ist besonders groß, wenn der Maximalwert der frühen Verzögerungsspitze mindestens 1000 bzw- 1.500 m/s² beträgt, wobei die Verzögerung unmittelbar danach auf unter 500 m/s² abfällt. Bei diesen Werten ist die Energieaufnahme besonders groß, ohne dass die zulässige Kopfbelastung ausgedrückt in einem HIC-Wert überschritten wird. Die genannten Werte lassen sich insbesondere durch das Simulationsverfahren nach EEVC-WG10, das in der Erläuterung zu Fig.1 näher beschrieben ist, bestimmen.

Vorzugsweise ist die Verzögerungsspitze spätestens nach 5 - 8 msec nach einem Erstkontakt des aufschlagenden Kopfes mit der Fronthaube auf unter 500 m/s² abgefallen- Wertet man diese erste Spitze aus, so sollte sich ein HIC-Wert kleiner 1.000 einstellen.

Zusätzlich zu der oberen Schale kann die Motorhaube auch eine untere Schale aufweisen, zwischen denen die Versteifungslage angeordnet ist. Durch diese Verbundstruktur wird eine hohe Steifigkeit erreicht, ohne dass insbesondere die obere Schale besonders dick ausgeführt werden müsste. Bei einer stoßartigen Belastung wird daher die Versteifungslage zur Erzeugung der frühen Verzögerungsspitze zusammengedrückt, da sie von der unteren Schale getragen wird. Erst danach biegt sich die gesamte Motorhaube deutlich durch. Die dabei auftretenden Kräfte bestimmen vor allem den Verlauf der Verzögerung nach der ersten Verzögerungsspitze. Auf diese Weise kann sichergestellt werden, dass auch nach Kollabieren der Schaumstoffschicht noch im ausreichenden Maße Bewegungsenergie absorbiert wird.

Der Verzögerungsverlauf gemäß der Erfindung lässt sich dann besonders gut in einer gewünschten Weise einstellen, wenn die obere und ggf. die untere Schale aus Kunststoff oder Metall gebildet sind und eine Dicke t₁ aufweisen und dass die die Versteifungslage bildende Schicht vorzugsweise eine Kunststoffschicht ist, die eine Dicke t₂ aufweist, wobei t₂ sehr viel größer, insbesondere 4 bis 15 mal größer, als t₁ ist. Dadurch wird erreicht, dass in der ersten Verzögerungsspitze ein Großteil der Bewegungsenergie durch Zusammendrücken der Kunststoffschicht absorbiert wird.

Eine weitere Möglichkeit, den genannten Verzögerungsverlauf zu erreichen, soll im Folgenden beschrieben werden. Dieser Lösung liegt dabei ein weiteres Problem zugrunde: Die obere Schale der Motorhaube besteht in der Regel aus einem dünnen Blech, das von einem Gerippe oder - wie oben beschrieben - von einer konventionellen Schaumstoffschicht versteift ist, um Einbeulungen bei einer statischen Belastung zu verhindern. Einige Bereiche der Haube sind aber besonderen statischen Belastungen ausgesetzt, wie z.B. der Bereich über einem Haubenschloss. Damit nämlich das Schloss einrastet, wird vom Fahrzeugbenutzer auf die Oberseite der Oberschale oberhalb des Schlosses ein Druck ausgeübt. Um hier eine Eindellung zu vermeiden, ist dieser Bereich in der Regel durch eine zusätzliches Versteifungsschiene versteift, was aber dazu führt, dass sich hier bei einem Kopfaufschlag ein Verzögerungsverlauf mit einem zu hohen HIC-Wert einstellt.

Das spezielle Problem besteht somit darin, die Motorhaube so zu gestalten, dass eine Einbeulung der Motorhaube bei einer statischen Druckbelastung vermieden wird, aber bei einer dynamischen Belastung, wie sie bei einem Kopf- oder Körperaufprall auftritt, sich ein angemessener HIC-Wert einstellt.

Ausgehend von der weiter oben schon beschriebenen generellen Lösung besteht eine weitere erfindungsgemäße Lösung darin, dass bei einer Frontstruktur gemäß dem Oberbegriff des Anspruchs 1 die Motorhaube eine obere Schale mit einer geringen Beulsteifigkeit aufweist und an der Unterseite der Oberschale eine dünne Stützschicht aus einem spröden Material befestigt ist.

Die Stützschicht aus sprödem Material verstärkt die obere Schale, so dass die Haube eine Beulsteifigkeit aufweist, als wäre ihre obere Schale aus einem dickeren Blech mit hoher Beulsteifigkeit hergestellt.

Weil aber die Stützschicht als Ganzes, also in der Makrostruktur, wegen der Sprödheit des Materials bei einer dynamischen Belastung bricht, ergibt sich ein Verzögerungsverlauf, der hinsichtlich eines HIC-Wertes optimiert ist: So lange die Stützschicht noch intakt ist, ist die Verzögerung noch sehr hoch. Sie wird aber deutlich kleiner, sobald die Stützschicht bricht, so dass für den weiteren Verzögerungsverlauf ausschließlich die Steifigkeit der Oberschale ausschlaggebend ist. Die anfänglich hohe Verzögerung liegt damit nur für einen kurzen Zeitraum vor, so dass die Kopfbelastung erträglich ist.

In einer bevorzugten Ausführung ist die Stützschicht aus sprödem Material mit der Oberschale flächig verbunden. Damit wird erreicht, das auch eine relativ dünne Stützschicht einen ausreichenden Versteifungseffekt hervorruft.

Vorzugsweise wird diese Art der Verstärkung lokal im Bereich des Haubenschlosses eingesetzt, da wegen des Platzes, den das Schloss benötigt, die weiter oben beschriebene Sandwichstruktur mit einer versteifenden und unter Belastung kollabierenden Schaumstoffschicht hier nicht ohne Weiteres eingesetzt werden kann.

Zur Verdeutlichung des Erfindungsgedankens wird im Folgenden anhand von zwei Ausführungsbeispielen die Erfindung näher erläutert. Dazu zeigen
- Fig. 1: eine perspektivische Darstellung einer im Schnitt dargestellten Motorhaube in Sandwichbauweise,
- Fig. 2: ein optimales Verzögerungsprofil entsprechend einer Aufprallsituation gemäß
- Fig. 3,: die den simulierten Kopfaufprall auf eine Motorhaube oberhalb einer Aufnahme für einen Stoßdämpfer wiedergibt, und
- Fig. 4: einen Querschnitt durch eine Motorhaube mit einem Haubenschloss und einer Versteifung gemäß einer zweiten Ausführung der Erfindung.

Gemäß Figur 1 besteht eine Motorhaube 1 aus einer umhüllten Schaumstoffschicht 2, wobei die Umhüllung durch eine obere und untere Schale 3, 4 gebildet ist. In einer alternativen Ausführung kann auf die Unterschale verzichtet werden. Diese bestehen aus einem festen Kunststoff oder einem Metall, während die Schaumstoffschicht 2 selbst aus einem Kunststoff besteht. Hierbei kann es sich um eine Faserverbundstruktur aus Carbon-, Glas- oder Aramidfasern mit einer thermoplastischen oder duromeren Matrix mit höherer Festigkeit handeln.

Durch eine entsprechende Auswahl des Materials und durch die Darstellung einer bestimmten Schaumstruktur kann bei diesem Material erreicht werden, dass die Schicht in gewünschter Weise kollabiert. Wenn die Schicht aus mehreren Einzelschichten aufgebaut ist, kann durch die Wahl einer entsprechenden Schichttrennfestigkeit erreicht werden, dass durch Reißen der Einzelschichtverbindung ebenfalls ein Kollabieren der Schicht bewirkt wird.

Denkbar wären auch Laminate aus Glas höherer Festigkeit. Das für Glas typische Sprödbruchverhalten bewirkt, dass die Schicht bei einer bestimmten Belastung bricht, wodurch sie keine weitere Widerstandskraft mehr aufbauen kann und die bis dahin aufgenommene Energie auch nicht wieder an den Aufschlagkörper abgibt.

Anstelle von Glas können auch spezielle Faserverbundpolymere oder Schäume mit glasähnlichen Eigenschaften hinsichtlich der Festigkeit und des Sprödbruchverhaltens eingesetzt werden.

Entscheidend ist in allen Fällen, dass bei einem Aufprall zunächst ein Widerstand aufgebaut wird, der bei Erreichen einer bestimmten Kraft bzw. Durchbiegung oder Eindrückung z. B. durch Brechen des den Kern bildenden Materials abgebaut wird.

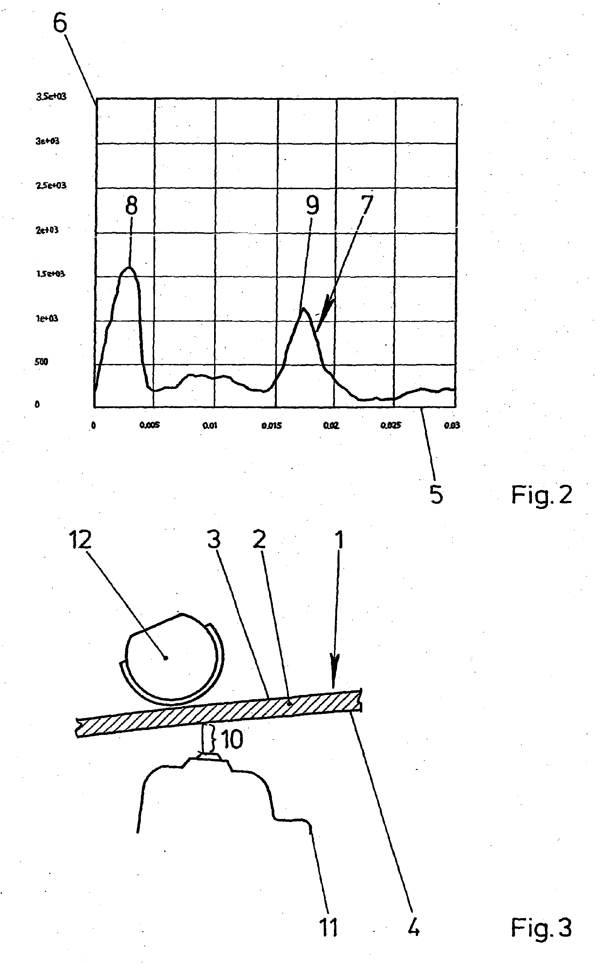

Durch dieses System ergibt sich ein Verzögerungsverlauf 7, wie er als Messkurve in Figur 2 dargestellt ist. Die Werte ergeben sich für einen Simulationskopf gemäß EEVC. Hierbei handelt es sich um einen Kopfimpaktor 12 (siehe Fig. 3) nach EEVC-WG10, der aus einem Phenolharzkern besteht, der mit einer 7,5 mm dicken Gummischicht überzogen ist. Der Impaktor 12 hat eine Masse von 4,8 kg und wird mit einer Geschwindigkeit von 40 km/h unter einem Winkel von 65° zur Horizontalen auf die Motorhaube geschossen. Der dargestellte Verzögerungsverlauf ergibt sich für einen Kopfaufprall oberhalb des sogenannten Doms 11, in dem der Stoßdämpfer für ein Vorderrad befestigt ist.

Auf der X-Achse 5 des Diagramms der Figur 2 ist die Zeit und auf der Y-Achse 6 die Kopfverzögerung, die mit einem Beschleunigungsaufnehmer im Schwerpunkt des Impaktors 12 gemessen wird, aufgetragen. Der Verzögerungsverlauf 7 zeigt, dass sich direkt nach einem Erstkontakt des aufschlagenden Kopfes, im Nullpunkt des Koordinatensystems dargestellt, eine relativ hohe Verzögerungsspitze 8 einstellt, die Werte über 1.500 m/s² aufweist, die aber schon nach 5 msec auf einen Wert von unter 500 m/s² abgefallen ist, weil die innere Struktur der Motorhaube gebrochen wurde. Die Geschwindigkeit des Impaktors 12 ist aber nicht vollständig abgebaut, so dass es wegen des knappen Zwischenraums 10 zwischen der Motorhaube 1 und dem Dom 11 (siehe Fig.3) zu einem zweiten Anstieg 9 des Verzögerungsverlaufes 7 kommt. Dieser ist aber mit einer wesentlich geringeren Verzögerung verbunden, so dass ein HIC-Wert von 1.000 nicht überschritten wird.

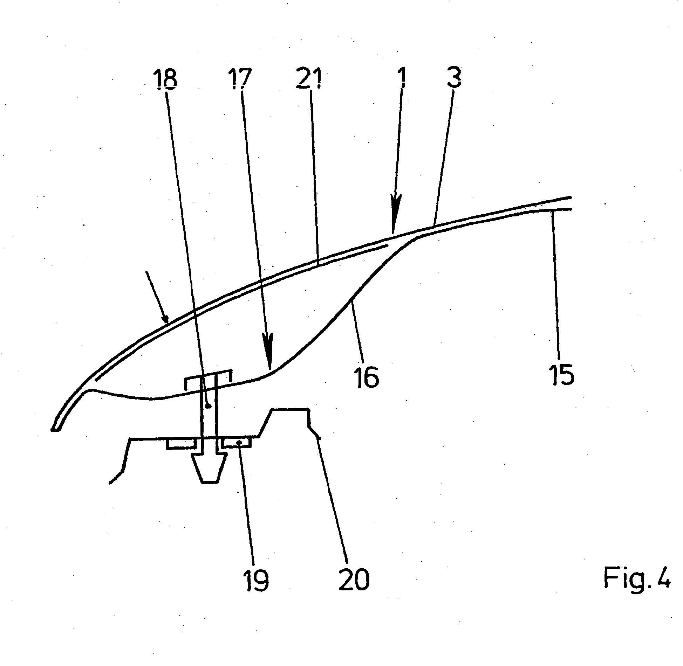

Fig. 4 zeigt eine zweite Ausführung der Erfindung. Die Motorhaube 1, deren vorderer Teil im Schnitt gezeigt ist, besteht aus einer oberen Schale 3, die durch ein Blechgerippe 15 verstärkt ist. Das Gerippe 15 weist einen an der Motorhaube 1 umlaufenden Rand 16 auf und einige Quer- und Längsverstrebungen, die hier nicht näher dargestellt sind. Zum Teil ist das Blechgerippe 15 von der oberen Schale 3 beabstandet, zum Teil liegt es an.

Der vordere Abschnitt des Randes 16 weist mittig eine Einbuchtung 17 auf, an der der Dorn 18 eines Haubenschlosses befestigt ist. Die dazugehörige Schlossfalle 19 ist in einem Querträger 20 der Fahrzeugkarosserie untergebracht.

Damit der Dorn 18 in der Schlossfalle 19 einrastet, muss die Haube mit Schwung oder mit einem leichten Druck gegen die Kraft einer Feder in Richtung auf den Querträger 20 gedrückt werden. Dazu wird auf die obere Schale 3 von oben ein Druck ausgeübt. Damit dabei das Blech der oberen Schale 3 nicht eingebeult wird, ist es an der Innenseite mit einer dünnen Stützschicht 21 aus einem spröden Material verklebt. Die Bruchgrenze des Materials wird bei den Kräften, die zum Schließen der Haube statisch aufgebracht werden, nicht erreicht. Bei einer dynamischen Stoßbelastung, wie sie bei einem Kopf- oder Körperaufschlag auftritt, setzt der Verbund aus dem Blech der oberen Schale 3 und der Stützschicht 21 dem aufprallenden Körper zunächst einen hohen Widerstand entgegen, der aber weitgehend in sich zusammenbricht, wenn die Bruchgrenze des spröden Materials der Stützschicht 21 erreicht wird. Bei einem Körper- oder Kopfaufprall stellt sich damit ein Verzögerungsverlauf ein, wie er schematisch in der Fig. 2 dargestellt ist und der durch eine hohe anfängliche Verzögerungsspitze charakterisiert ist.

Bei dem Material kann es sich um Metalle nahe der Streckgrenze - Kunststoffe, Keramiken oder dergleichen - handeln.

### Bezugszeichenliste

- 1: Motorhaube
- 2: Schaumstoffschicht
- 3: obere Schale
- 4: untere Schale
- 5: X-Achse

- 6: Y-Achse
- 7: Verzögerungsverlauf
- 8: Verzögerungsspitze
- 9: Anstieg
- 10: Zwischenraum

- 11: Dom
- 12: Impaktor

- 15: Blechgerippe

- 16: Rand
- 17: Einbuchtung
- 18: Dorn
- 19: Schlossfalle
- 20: Querträger

- 21: Stützschicht

## Patentansprüche

1. Kopfaufpralloptimierte Frontstruktur eines Kraftfahrzeuges mit einer stabilen, im Falle einer stoßartigen Belastung aber verformbaren Motorhaube (1) mit einer oberen Schale und einer darunter angeordneten und mit dieser verbundenen Versteifungslage, wobei sich bei einem Kopfaufprall ein bestimmter zeitlicher Verzögerungsverlauf (7) einstellt, aus denen sich ein HIC-Wert ableiten lässt, wobei die Versteifungslage beim Erreichen eines bestimmten Belastungsniveaus während einer stoßartigen Belastung durch Brüche in ihrer Mikro- und/oder Makrostruktur zumindest zum Teil die Fähigkeit verliert, einen Verformungswiderstand aufzubauen, so dass sich im zeitlichen Verzögerungsverlauf (7) eine frühe Verzögerungsspitze (8) einstellt, **dadurch gekennzeichnet, dass** die Versteifungslage von einer dicken Schaumstoffschicht (2) gebildet ist, deren Material eine gewisse Sprödigkeit besitzt, so dass bei einer lokalen stoßartigen, durch einen Aufschlag ausgelösten Belastung die Schaumstruktur dort kollabiert und dass die Motorhaube (1) so aufgebaut ist, dass sie sich unter einer Stoßbelastung durchbiegt, wobei der Biegungswiderstand im Wesentlichen das Verzögerungsniveau nach der frühen Verzögerungsspitze (8) bestimmt.

2. Frontstruktur nach Anspruch 1, **dadurch gekennzeichnet, dass** der Maximalwert der frühen Verzögerungsspitze (8) mindestens 1000 m/s² beträgt, wobei die Verzögerung unmittelbar danach auf unter 500 m/s² abfällt.

3. Frontstruktur nach Anspruch 2, **dadurch gekennzeichnet, dass** der Maximalwert der frühen Verzögerungsspitze (8) mindestens 1.500 m/s² beträgt.

4. Frontstruktur nach Anspruch 2 oder 3, **dadurch gekennzeichnet, dass** die Verzögerung spätestens nach 5 bis 8 msec nach einem Erstkontakt des aufschlagenden Kopfes mit der Fronthaube auf unter 500 m/s² abgefallen ist.

5. Frontstruktur nach einem der vorhergehenden Ansprüche, **dadurch gekennzeichnet, dass** die Motorhaube (1) zusätzlich zu der oberen Schale (3) eine untere Schale (4) aufweist, zwischen denen die Versteifungslage angeordnet ist.

6. Frontstruktur nach einem der vorhergehenden Ansprüche, **dadurch gekennzeichnet, dass** die obere Schale (3) und ggf. die untere Schale (4) aus Kunststoff oder Metall gebildet sind, die jeweils eine Dicke t₁ aufweisen, und dass die die Versteifungslage bildende Schicht (2) eine Dicke t₂ aufweist, wobei t₂ sehr viel größer als t₁ ist.

7. Frontstruktur nach Anspruch 6, **dadurch gekennzeichnet, dass** t₂ 4 bis 15 mal größer ist als t₁.

8. Frontstruktur nach einem der Ansprüche 1 bis 7, **dadurch gekennzeichnet, dass** die obere Schale (3) eine geringe Beulsteifigkeit aufweist und an der Unterseite der oberen Schale (3) eine die versteifungslage bildende dünne Stützschicht (21) aus einem spröden Material befestigt ist.

9. Frontstruktur nach Anspruch 8, **dadurch gekennzeichnet, dass** die Stützschicht (21) aus sprödem Material mit der der oberen Schale (3) flächig verbunden ist.

10. Frontstruktur nach Anspruch 9, **dadurch gekennzeichnet, dass** die Stützschicht (21) auf einen Bereich der Motorhaube (1) lokalisiert ist, unter dem sich das Haubenschloss befindet.

## Claims

1. A head-impact-optimized front structure of a motor vehicle having a bonnet (1) which is sturdy but deformable in the event of an impulsive load and which comprises an upper skin and a stiffening layer that is arranged therebelow and connected thereto, wherein, in the event of a head impact, a certain temporal deceleration process (7) is initiated from which a HIC value can be derived, wherein, when reaching a certain load level during an impulsive load, the stiffening layer at least partially loses the ability to develop a deformation resistance by breaks in the micro and/or macro structure thereof so that an early deceleration peak (8) occurs in the course of the temporal deceleration process (7), **characterized in that** the stiffening layer is formed by a thick layer of foamed material (2) whose material possesses a certain brittleness so that in the event of a local impulsive load produced by an impact the foamed structure collapses there, and **in that** the bonnet (1) is constructed in such a manner that it bends under an impulsive load wherein the bending resistance essentially determines the level of deceleration following the early deceleration peak (8).

2. A front structure in accordance with Claim 1, **characterized in that** the maximum value of the early deceleration peak (8) amounts to at least 1000 m/s², wherein the deceleration drops immediately thereafter to under 500 m/s².

3. A front structure in accordance with Claim 2, **characterized in that** the maximum value of the early deceleration peak (8) amounts to at least 1,500 m/s².

4. A front structure in accordance with Claim 2 or 3, **characterized in that** the deceleration has dropped to under 500 m/s² at the latest after 5 to 8 msec following a first contact of the impinging head with the front bonnet.

5. A front structure in accordance with any of the preceding Claims, **characterized in that** the bonnet (1) comprises a lower skin (4) in addition to the upper skin (3), the stiffening layer being arranged therebetween.

6. A front structure in accordance with any of the preceding Claims, **characterized in that** the upper skin (3) and possibly also the lower skin (4) are formed of synthetic material or metal and have a thickness in each case of t₁, and **in that** the layer (2) forming the stiffening layer has a thickness t₂, where t₂ is very much greater than t₁.

7. A front structure in accordance with Claim 6, **characterized in that** t₂ is 4 to 15 times greater than t₁.

8. A front structure in accordance with any of the Claims 1 to 7, **characterized in that** the upper skin (3) has a small buckling resistance and a thin supporting layer (21) consisting of a brittle material which forms the stiffening layer is fixed to the lower surface of the upper skin (3).

9. A front structure in accordance with Claim 8, **characterized in that** the supporting layer (21) consisting of brittle material is connected in laminar manner to the upper skin (3) .

10. A front structure in accordance with Claim 9, **characterized in that** the supporting layer (21) is localised to an area of the bonnet (1) under which the bonnet lock is located.

## Revendications

1. Structure avant optimisée pour une collision de tête d'un véhicule automobile comprenant un capot moteur (1) robuste en cas de charge d'impact mais déformable, avec une coque supérieure et une couche de renfort agencée en dessous et reliée à celle-ci, pour laquelle une certaine décélération temporisée (7) se produit lors d'une collision de tête, de laquelle découle une valeur HIC, dans laquelle la couche de renfort perd au moins en partie la capacité de résister aux déformations lorsqu'un certain niveau de charge est atteint lors d'une charge d'impact, en raison de fissures dans sa microstructure et/ou sa macrostructure, de sorte qu'une pointe de décélération (8) précoce survient pendant la décélération temporisée (7), **caractérisée en ce que** la couche de renfort est constituée d'une épaisse couche en mousse (2), dont le matériau possède une certaine fragilité, de sorte qu'en cas de charge d'impact localisée provoquée par un choc, la structure en mousse se rétracte à l'endroit de l'impact et que le capot (1) est conçu de façon à ce qu'il plie sous l'effet d'une charge d'impact, pour laquelle la résistance à la courbure détermine essentiellement le niveau de décélération à la suite de la pointe de décélération précoce (8).

2. Structure avant selon la revendication 1, **caractérisée en ce que** la valeur maximale de la pointe de décélération précoce (8) est au moins égale à 1000 m/s², pendant laquelle elle descend tout de suite après sous le seuil de 500 m/s².

3. Structure avant selon la revendication 2, **caractérisée en ce que** la valeur maximale de la pointe de décélération précoce (8) s'élève au moins à 1500 m/s².

4. Structure avant selon les revendications 2 ou 3, **caractérisée en ce que** la décélération chute sous le seuil de 500 m/s² au plus tard après 5 à 8 msec, à la suite d'un premier contact de la tête entrant en collision avec le capot.

5. Structure avant selon l'une quelconque des revendications précédentes, **caractérisée en ce que** le capot moteur (1) présente en plus de la coque supérieure (3), une coque inférieure (4), entre lesquelles est agencée la couche de renfort.

6. Structure avant selon l'une quelconque des revendications précédentes, **caractérisée en ce que** la coque supérieure (3) et le cas échéant, la coque inférieure (4), sont composées soit de matière plastique, soit de métal, qui présentent respectivement une épaisseur t₁, et **en ce que** la couche formant la couche de renfort (2) présente une épaisseur t₂, où t₂ est nettement plus importante que t₁.

7. Structure avant selon la revendication 6, **caractérisée en ce que** t₂ est 4 à 15 fois plus important que t₁.

8. Structure avant selon l'une quelconque des revendications 1 à 7, **caractérisée en ce que** la coque supérieure (3) présente une faible résistance aux bosses et qu'une fine couche de support (21) constituée d'un matériau cassant et formant la couche de renfort est fixée sur la face inférieure de la coque supérieure (3).

9. Structure avant selon la revendication 8, **caractérisée en ce que** la couche de support (21) constituée d'un matériau cassant est reliée en superficie à celle de la coque supérieure (3).

10. Structure avant selon la revendication 9, **caractérisée en ce que** la couche de support (21) est localisée dans une zone du capot moteur (1) sous laquelle se situe le système de fermeture du capot.
